# FASCICULE DE BREVET EUROPEEN

(11) **EP 0 764 612 B1**
(45) Date de publication et mention de la délivrance du brevet: **04.04.2001**
(21) Numéro de dépôt: 96440073.3
(22) Date de dépôt: 18.09.1996
(51) Int. Cl.: C02F 5/08, C02F 5/02, C02F 1/48

(54) **Procédé de nutrition d'animaux d'élevage et installation de carbonatation d'eau en instantané pour la mise en oeuvre du procédé**
Verfahren zum Futtern von Zuchttieren und Vorrichtung zum Karbonisieren von Wasser zur Ausführung dieses Verfahrens
Method of nutrition of farm animals and equipment for instant carbonation of water for carrying out this method

(30) Priorité: 19.09.1995 FR 9511183
(43) Date de publication de la demande: 26.03.1997
(73) Titulaire: Agrosol S.A., 51490 Saint-Martin-L'Heureux (FR)
(72) Inventeur: Gallois, Bernard, 51490 Saint-Martin-L'Heureux (FR)
(74) Mandataire: Rhein, Alain

(56) Documents cités:
- WO-A-94/02422
- FR-A- 2 696 169
- FR-A- 2 699 163
- US-A- 3 048 164

## Description

L'invention a trait à un procédé de nutrition d'animaux d'élevage ainsi qu'à une installation de carbonatation d'eau en instantané pour la mise en oeuvre de ce procédé.

Il est connu que les animaux élevés en batterie sont soumis à un stress en raison de leur promiscuité, sans compter que la moindre variation dans leur condition d'élevage, tel qu'une augmentation sensible de la température ambiante, conduit, systématiquement à une augmentation de ce stress. De ce fait, les animaux mangent moins, tandis que leur digestion est, elle aussi, moins bonne se traduisant par des fientes plus liquides et donc plus agressives. Il en résulte une prolifération importante des bactéries d'où l'emploi d'antibiotiques dans des proportions impressionnantes pour éviter les risques de maladies.

Ces fientes agressives ont pour inconvénient, en outre, d'attaquer les pattes des animaux et, à moins de procéder à des nettoyages sans cesse des installations, il faut, là encore, prévoir un apport suffisant en médicaments pour éviter d'éventuelles maladies.

Au travers du procédé de nutrition conforme à l'invention, il a été constaté une diminution sensible du stress de ces animaux d'élevage, une meilleure digestibilité des aliments observée par des fientes plus sèches d'où découlent, par ailleurs, moins de problèmes de pattes.

En fin de compte, l'état sanitaire de ces animaux a été amélioré au travers de ce procédé ayant permis, par ailleurs, de diminuer considérablement l'emploi des antibiotiques, ceci dans des proportions allant jusqu'à 50 %.

De plus, ce procédé de nutrition, conforme à l'invention et consistant à donner aux animaux de l'eau carbonatée à des concentrations, préférentiellement, supérieures ou égales à 0,7 g/litre, engendre, d'une manière générale, un gain de poids supérieur de ces animaux en un temps donné. En effet le caractère plus appétent de l'eau carbonatée conduit à une augmentation de la consommation d'eau par ces animaux d'où résulte, précisément, une augmentation de la quantité d'aliments ingurgités. Ce phénomène est amplifié au travers d'une amélioration de la digestion des aliments. En fin de compte il en résulte une meilleure valorisation énergétique de ces aliments.

L'on observera qu'en délivrant aux animaux de l'eau carbonatée, l'on résout, par ailleurs, bon nombre de problèmes rencontrés au niveau des dispositifs d'approvisionnement en eau d'animaux élevés en batterie. Ainsi, le fait de carbonater l'eau permet d'en réguler le pH, sans compter que le CO2 a des conséquences bénéfiques sur la dureté de cette eau. En effet, le CO2 permet de mettre les bicarbonates en solution qui, de ce fait, ne deviennent plus incrustants et, donc, ne se sédimentent plus. A titre d'exemple, la présence de CO2 permet de réduire, dans certains cas, jusqu'à 40 % la dureté de l'eau. Aussi, il y a moins d'incrustation de calcaire dans les pipettes fournissant habituellement l'eau aux volailles.

L'invention concerne, en outre, une installation de carbonatation d'eau en instantané pour la mise en oeuvre du procédé caractérisée en ce qu'elle comporte une conduite d'arrivée d'eau raccordée, au travers d'une première électrovanne, à un dispositif mélangeur où l'eau est additionnée de dioxyde de carbone sous pression contenue dans un réservoir de stockage relié audit dispositif mélangeur par l'intermédiaire d'une seconde électrovanne, cette installation comportant, en outre, un bassin de stockage d'eau carbonatée, disposé en sortie du dispositif mélangeur, ainsi que des moyens de mesure du niveau et/ou de la pression d'eau dans ce bassin de stockage à même de commander au moins l'ouverture et la fermeture de la première électrovanne, le fonctionnement de la seconde électrovanne étant, selon le cas, asservi à celui de la première électrovanne ou commandé directement par lesdits moyens de mesure et/ou par des moyens de détection d'un flux d'eau traversant l'installation.

Selon une autre caractéristique de l'invention, l'installation comporte au moins une pompe à même de réguler la pression d'eau traversant cette installation. Le fonctionnement de cette pompe est commandé, préférentiellement, par les moyens de mesure de niveau et/ou de pression d'eau dans le bassin de stockage, tout comme la première électrovanne.

Avantageusement, l'installation comporte une temporisation à même de commander la fermeture de la seconde électrovanne en vue de couper l'arrivée du dioxyde de carbone au-delà d'un temps déterminé correspondant, sensiblement, à une durée supérieure ou égale au temps normal de remplissage du réservoir de stockage.

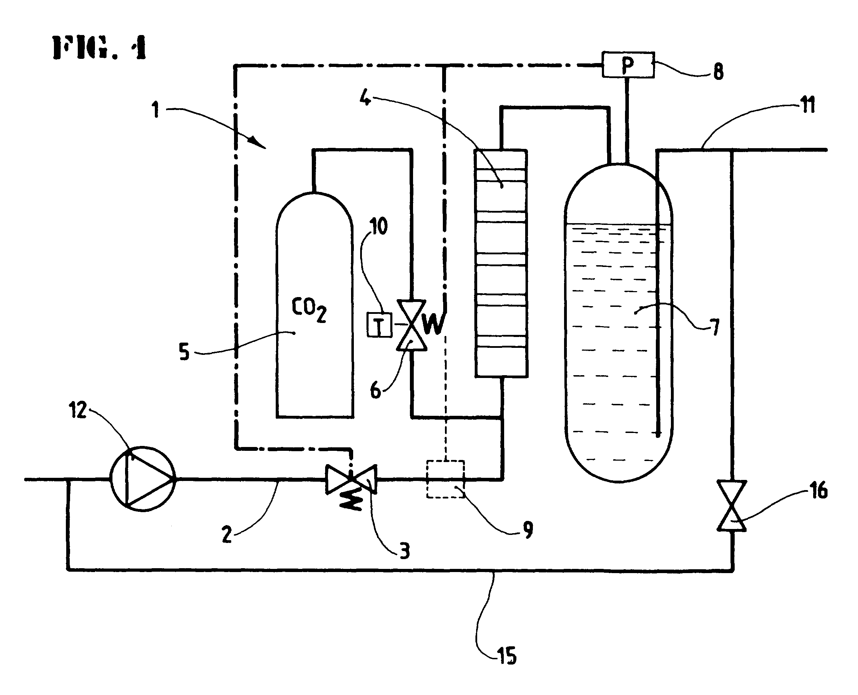

L'invention est exposée plus en détail dans la description qui va suivre se rapportant à des modes de réalisation illustrés dans le dessin ci-joint dans lequel la figure 1 est une vue schématisée d'un mode de réalisation de l'installation conforme à l'invention.

Tel que précisé plus haut, la présente invention concerne un procédé de nutrition d'animaux d'élevage consistant à leur donner de l'eau carbonatée à des concentrations supérieures ou égales à 0,7 g de dioxyde de carbone par litre d'eau.

Les avantages découlant de la présente invention sont considérables.

L'un des principaux avantages consiste, en une meilleure digestibilité des aliments conduisant à des fientes plus sèches, donc à une réduction de la prolifération des bactéries se traduisant, d'une part, par une réduction des problèmes des pattes de ces animaux et par une diminution de l'emploi des antibiotiques pouvant aller jusqu'à 50 %.

Par ailleurs, en respectant des concentrations de CO2 dans l'eau dans les proportions précitées, l'eau est microbulleuse et s'avère plus appétente, ce qui se traduit par une consommation accrue d'eau par les animaux et, en conséquence, une augmentation des aliments absorbés. Celle-ci étant, par ailleurs, mieux digérée et, donc, davantage valorisée du point de vue énergétique, la prise de poids des animaux s'effectue plus rapidement.

L'invention concerne, également, une installation pour la mise en oeuvre de ce procédé.

Cette installation, dont un mode de réalisation a été illustré dans la figure 1, comporte une conduite d'arrivée d'eau 2, celle-ci correspondant, par exemple, à l'alimentation en eau d'un bâtiment agricole. Cette conduite 2 est reliée, au travers d'une première électrovanne 3, à un dispositif mélangeur 4 où l'eau est alors additionnée de dioxyde de carbone sous pression contenue dans un réservoir de stockage 5. En fait, ce réservoir de stockage 5 est relié au dispositif mélangeur 4 par l'intermédiaire d'une seconde électrovanne 6 éventuellement en passant par un détendeur approprié. A ce propos, il est à remarquer que l'alimentation en dioxyde de carbone du dispositif mélangeur 4, se fait, nécessairement, à une pression supérieure à l'eau.

L'installation 1 comporte, en outre, un bassin de stockage 7 dans lequel est maintenue l'eau sous pression après carbonatation. Un tel bassin de stockage 7 a, finalement, pour fonction d'améliorer la dissolution du CO2 dans l'eau et de créer, en outre, un stock tampon d'eau carbonatée de manière à éviter une mise en route systématique de l'installation à chacune des demandes d'eau par les animaux.

En fait, selon l'invention, cette installation 1 comporte des moyens de mesure 8 du niveau et/ou de la pression d'eau dans ledit bassin de stockage 7 qui ont pour fonction de commander l'ouverture, plus particulièrement, de la première électrovanne 3 lorsque la quantité d'eau carbonatée dans le bassin de stockage 7 atteint un minimum, cette première électrovanne 3 étant au contraire, fermée, une fois le bassin de stockage 7 rempli.

Selon un mode de réalisation avantageux, ces moyens de mesure 8 se présentent sous forme d'un pressostat détectant une pression minimum et une pression maximum à l'intérieur de ce bassin de stockage 7 pour, respectivement, ouvrir et fermer la première électrovanne 3.

En réalité, de tels moyens de mesure 8 notamment sous forme d'un pressostat, peuvent, également, assurer la commande de la seconde électrovanne 6 assurant l'alimentation en dioxyde de carbone. Il en résulte, en conséquence, une synchronisation de l'alimentation en CO2 et en eau.

L'on notera, cependant, que cette seconde électrovanne 6 peut être commandée par des moyens différents, tout particulièrement, par des moyens de détection d'un flux d'eau traversant l'installation 1, tel qu'un compteur d'eau à induction. Dans ces conditions, l'électrovanne 6 est maintenue ouverte, tant qu'il détecté un courant au niveau dudit compteur d'eau.

Préférentiellement, l'installation 1 est encore équipée d'une temporisation T 10 ayant pour fonction de commander la fermeture de la seconde électrovanne 6 au-delà d'une durée de fonctionnement qui est déterminée supérieure ou égale à la durée normale du remplissage du bassin de stockage 7. Ainsi, en cas, par exemple, de rupture de la conduite 11 acheminant l'eau carbonatée aux abreuvoirs ou autres dispositifs de distribution d'eau, l'on évite une carbonatation inutile de l'eau.

Selon l'invention, l'installation 1 comporte, en outre, une pompe 12 disposée sur le circuit, celle-ci ayant pour fonction de réguler la pression de cette eau traversant l'installation 1. Ainsi, tel que visible dans la figure 1, cette pompe 12 peut être placée en partie amont, sur la conduite d'arrivée d'eau 2, tout comme elle pourrait se situer en aval, sur la conduite d'évacuation 11.

En cas de surpression sur le réseau d'alimentation en eau, cette pompe 12 permet de l'abaisser de manière à l'amener à une pression de travail préférentiellement comprise entre 2 et 4 bars, sachant qu'au-delà de 4 bars se posent des problèmes de givrage du gaz carbonique. D'ailleurs, il peut être avantageux, dans ces conditions, d'équiper l'installation 1 d'un réchauffeur de gaz carbonique disposé en sortie de réservoir de stockage 5.

Dans le cas contraire, c'est-à-dire si sur le réseau d'alimentation en eau la pression est insuffisante et en vue de pallier à la perte de charge produite par l'installation 1 elle-même, la pompe 12 a pour fonction d'augmenter la pression d'eau dans les proportions préalablement citées.

On notera que dans le cas plus particulier où l'eau acheminée au travers du réseau d'alimentation principal est à une pression comprise dans la plage préférentielle de 2 à 4 bars, mais qu'il est nécessaire, pour acheminer cette eau au niveau des animaux de disposer d'une pression supérieure, la pompe 12 est préférentiellement implantée en aval de l'installation 1.

Par ailleurs, si sur le réseau d'alimentation principal l'eau est acheminée à pression élevée, pression par ailleurs nécessaire pour amener cette eau au niveau des dispositifs de distribution d'eau, on implantera, préférentiellement, une première pompe 12 en amont de l'installation 1 pour réduire la pression dans la plage préférentielle de 2 à 4 bars. Puis une seconde pompe est installée en aval de l'installation 1 pour remonter la pression à la valeur souhaitée.

Selon l'invention cette installation 1 comporte, en outre, un dispositif de sécurité nécessitant le réarmement du circuit électrique de l'installation 1, après coupure intempestive de l'alimentation en énergie électrique. En fait, ce dispositif de sécurité est complété par des moyens de commande d'ouverture automatique de l'électrovanne 3 après rétablissement du courant, de sorte qu'une fois le courant rétabli l'on soit certain que les animaux sont alimentés en eau.

L'on observera qu'il est également possible de prévoir, en lieu et place ou en parallèle de ces moyens de commande d'ouverture automatique de l'électrovanne 3, un by-pass 15 reliant la conduite d'arrivée d'eau 2 à la conduite d'évacuation d'eau 11 au travers d'une électrovanne 16 en position normale ouverte. Ainsi, cette électrovanne 16 viendrait s'ouvrir, automatiquement, en cas de coupure de l'alimentation électrique de l'installation 1 ou lors d'un quelconque disfonctionnement de cette dernière.

Tel que déjà indiqué plus haut dans la description, le fait de carbonater l'eau se traduit par un meilleur équilibre acido-basique de cette dernière. De plus il favorise la dissolution du bicarbonate qui ne sédimente plus, notamment au niveau des dispositifs de distribution d'eau aux animaux. On notera, à ce propos, que de tels dispositifs se présentent, s'agissant d'élevage de volaille, sous forme de pipettes facilement encrassables.

A ce propos l'on vient réduire encore davantage la dureté de l'eau en soumettant celle-ci à l'action d'un champ magnétique qui, comme connu en soi, modifie la structure moléculaire du calcaire lequel se trouve en suspension dans l'eau sous forme d'aragonite cristallisée ne se déposant pas sur les parois des conduites.

En fait, selon l'invention, les aimants 17 à même de soumettre l'eau sous l'influence d'un champ magnétique sont disposés, préférentiellement, dans le dispositif mélangeur 4 dans la mesure où ce champ magnétique prédispose cette eau à la carbonatation. En outre, on observe que les bulles de gaz carbonique non immédiatement dissoutes dans l'eau sont attirées et retenues par les aimants le temps de leur dissolution.

En dehors des avantages précités résultant du procédé selon l'invention, l'on a pu constater que la mise en oeuvre de ce dernier dans le cadre de l'élevage de poules pondeuses, s'est traduite par l'obtention d'oeufs dont la coquille est plus dure. Tout comme le jaune d'oeuf elle est, par ailleurs, plus pigmentée. L'on obtient, en outre, un meilleur calibrage de ces oeufs.

De plus, il ressort des expériences menées que sur la quasi totalité des animaux d'élevage la consommation d'eau carbonatée plus appétente s'est traduite par une meilleure courbe de poids sans compter que ces animaux supportent mieux l'alcalose respiratoire pendant les périodes à forte chaleur.

Aussi, il doit être considéré que la présente invention représente un intérêt considérable dans ce domaine.

## Revendications

1. Procédé de nutrition d'animaux d'élevage consistant à leur donner de l'eau gazéifiée microbuleuse par apport de dioxyde de carbone gazeux pour l'obtention d'une concentration d'au moins 0,7g de dioxyde de carbone par litre d'eau.

2. Installation de carbonatation d'eau en instantané pour la mise en oeuvre du procédé selon la revendication 1, caractérisée en ce qu'elle comporte une conduite (2) d'arrivée d'eau raccordée, au travers d'une première électrovanne (3), à un dispositif mélangeur (4) où l'eau est additionnée de dioxyde de carbone sous pression contenue dans un réservoir de stockage (5) relié audit dispositif mélangeur (4) par l'intermédiaire d'une seconde électrovanne (6), cette installation (1) comportant, en outre, un bassin de stockage d'eau carbonatée (7) disposé en sortie du dispositif mélangeur (4), ainsi que les moyens de mesure (8) du niveau et/ou de la pression dans ce bassin de stockage (7) à même de commander au moins l'ouverture et la fermeture de la première électrovanne (3) , le fonctionnement de la seconde électrovanne (6) étant, selon le cas, asservi à la première électrovanne (3) ou commandé directement par lesdits moyens de mesure (8) et/ou par des moyens de détection (9) d'un flux d'eau traversant l'installation (1).

3. Installation selon la revendication 2, caractérisée par le fait que les moyens de mesure (8) se présentent sous forme d'un pressostat à même de détecter une pression minimum et une pression maximum à l'intérieur du bassin de stockage (6) pour, respectivement, ouvrir et fermer la seconde électrovanne (6) et/ou la première électrovanne (3).

4. Installation selon l'une quelconque des revendications 2 et 3, caractérisée par le fait qu'elle est équipée d'une temporisation T (10) à même de commander la fermeture de la seconde électrovanne (6) au-delà d'une durée de fonctionnement qui est déterminée supérieure ou égale à la durée normale de remplissage du bassin de stockage (7).

5. Installation selon l'une quelconque des revendications 2 et 3, caractérisée par le fait que les moyens de détection (9) d'un flux d'eau traversant l'installation (1) sont constitués par un compteur d'eau à induction, la seconde électrovanne (6) étant maintenue ouverte tant qu'il est détecté un courant au niveau dudit compteur.

6. Installation selon l'une quelconque des revendications 2 à 5, caractérisée par le fait qu'elle comporte au moins une pompe (12) ayant pour fonction de réguler la pression d'eau traversant l'installation (1).

7. Installation selon l'une quelconque des revendications 2 à 5, caractérisée par le fait qu'elle comporte une première pompe (12) disposée en amont, en vue de réguler la pression d'eau à l'intérieur de l'installation (1) et une seconde pompe disposée en aval pour envoyer l'eau carbonatée en direction de dispositifs de distribution d'eau à la pression souhaitée.

8. Installation selon l'une quelconque des revendications 2 à 7, caractérisée par le fait qu'elle comporte un circuit de sécurité nécessitant le réarmement du circuit électrique de l'installation (1) après coupure intempestive de l'alimentation en énergie électrique, ainsi que des moyens de commande d'ouverture automatique de la première électrovanne (3) après rétablissement du courant.

9. Installation selon l'une quelconque des revendications 2 à 8, caractérisée par le fait qu'elle comporte un by-pass (15) reliant la conduite d'arrivée d'eau (2) à une conduite d'évacuation (11) au travers d'une électrovanne (16) en position normalement ouverte, venant s'ouvrir, automatiquement, en cas de disfonctionnement de l'installation (1) ou de coupure de l'alimentation électrique de cette dernière.

## Claims

1. Process for feeding farming stock consisting in providing it with gasified water in microballs through the supply of gaseous carbon dioxide for obtaining a concentration of at least 0.7g of carbon dioxide per litre of water.

2. Plant for the instantaneous carbonation of water for implementing the process according to claim 1, characterised in that it includes a water-supply conduit (2) connected, through a first electrovalve (3), to a mixing device (4) in which the water is admixed with carbon dioxide under pressure contained in a storage tank (5) connected to said mixing device (4), through a second electrovalve (6), this plant (1) including, in addition, a carbonated-water storage tank (7) arranged at the outlet of the mixing device (4), as well as the means for measuring (8) the level and/or the pressure in this tank (7) capable of controlling at least the opening and closing of the first electrovalve (3), the operation of the second electrovalve (6) being, as the case may be, subjected to the first electrovalve (3) or controlled directly by said measuring means (8) and/or by means for detecting (9) a water flow through the plant (1).

3. Plant according to claim 2, characterised in that the measuring means (8) are in the form of a pressure controller capable of detecting a minimal pressure and a maximal pressure inside the storage basin (6) to open and close, respectively, the second electrovalve (6) and/or the first electrovalve (3).

4. Plant according to any of claims 2 and 3, characterised in that it is provided with a time-delay system T (10) capable of controlling the closing of the second electrovalve (6) after an operation time that is defined so as to be larger or equal to the normal filling time of the storage basin (7).

5. Plant according to any of claims 2 and 3, characterised in that the means for detecting (9) a water flow through the plant (1) are comprised of an induction water-meter, the second electrovalve (6) being maintained open as long as a flow is detected at the level of said meter.

6. Plant according to any of claims 2 to 5, characterised in that it includes at least one pump (12) aimed at regulating the water pressure through the plant (1).

7. Plant according to any of claims 2 to 5, characterised in that it includes a first pump (12) arranged upstream, in order to regulate the water pressure in the plant (1) and a second pump arranged downstream, in order to send the carbonated water towards water-supply devices at the desired pressure.

8. Plant according to any of claims 2 to 7, characterised in that it includes a safety circuit requiring the electric circuit of the plant (1) to be re-activated after an unexpected interruption of the electric-current supply, as well as means for controlling the automatic opening of the first electrovalve (3) upon restoring of the current supply.

9. Plant according to any of claims 2 to 8, characterised in that it includes a by-pass (15) connecting the water-supply conduit (2) to a discharge conduit (11), through an electrovalve (16) in normally open position, which automatically opens in the event of a dysfunction of the plant (1) or of an interruption of the electric-current supply of the latter.

## Patentansprüche

1. Verfahren zur Ernährung von Zuchttieren, das darin besteht, diesen durch Zumischung von Kohlendioxyd, bis zum Erhalten einer Konzentration von wenigstens 0,7g Kohlendioxyd pro Liter Wasser, mit Kohlensäure versetztes Wasser in Mikrokugeln zuzugeben.

2. Anlage zur sofortigen Karbonisierung von Wasser zur Anwendung des Verfahrens nach Anspruch 1, dadurch gekennzeichnet, daß sie eine Wasserzufuhrleitung (2) umfaßt, die über ein erstes Elektroventil (3) mit einer Mischvorrichtung (4) verbunden ist, in der dem Wasser unter Druck stehendes Kohlendioxyd zugemischt wird, das in einem Vorratbehälter (5) enthalten ist, der über ein zweites Elektroventil (6) mit der genannten Mischvorrichtung (4) verbunden ist, wobei diese Anlage (1) außerdem einen am Auslaß der Mischvorrichtung (4) angeordneten karbonisierten Wasservorratbehälter (7) sowie die Mittel zum Messen (8) des Pegels und/oder des Drucks in diesem Behälter (7) umfaßt, die geeignet sind, wenigstens das Öffnen und Schließen des ersten Elektroventils (3) zu steuern, wobei das Funktionieren des zweiten Elektroventils (6), je nach dem Fall, vom ersten Elektroventil (3) abhängig ist oder direkt durch die genannten Meßmittel (8) und/oder durch Mittel zum Erfassen (9) eines Wasserflußes durch die Anlage (1) gesteuert wird.

3. Anlage nach Anspruch 2, dadurch gekennzeichnet, daß die Meßmittel (8) als ein Druckregler ausgestaltet sind, der geeignet ist, einen Minimaldruck und einen Maximaldruck im Vorratbehälter (6) zu erfassen, um das zweite Elektroventil (6) und/oder das erste Elektroventil (3) zu öffnen bzw. zu schließen.

4. Anlage nach irgendeinem der Ansprüche 2 und 3, dadurch gekennzeichnet, daß sie mit einem Verzögerungssystem T (10) ausgerüstet ist, das geeignet ist, das Schließen des zweiten Elektroventils (6) nach einer Betriebszeit zu steuern, die so bestimmt wird, das sie länger als oder gleich der normalen Füllzeit des Vorratbehälters (7) ist.

5. Anlage nach irgendeinem der Ansprüche 2 und 3, dadurch gekennzeichnet, daß die Mittel zum Erfassen (9) eines Wasserflußes durch die Anlage (1) aus einem Induktions-Wasserzähler bestehen, wobei das zweite Elektroventil (6) geöffnet gehalten bleibt, solange eine Strömung im Bereich des genannten Zählers erfaßt wird.

6. Anlage nach irgendeinem der Ansprüche 2 bis 5, dadurch gekennzeichnet, daß sie wenigstens eine Pumpe (12) umfaßt, die dazu dient, den Wasserdruck in der Anlage (1) zu regulieren.

7. Anlage nach irgendeinem der Ansprüche 2 bis 5, dadurch gekennzeichnet, daß sie eine erste, stromaufwärts angeordnete Pumpe (12), um den Wasserdruck in der Anlage (1) zu regulieren, und eine zweite, stromabwärts angeordnete Pumpe umfaßt, um das karbonisierte Wasser unter dem gewünschten Druck in Richtung von Wasserverteilungsvorrichtungen zu senden.

8. Anlage nach irgendeinem der Ansprüche 2 bis 7, dadurch gekennzeichnet, daß sie einen Sicherheitskreis, der die Wiedereinschaltung des elektrischen Stromkreises der Anlage (1) nach eines unerwarteten Ausfalls der elektrischen Stromversorgung erfordert, sowie Mittel zum Steuern der automatischen Öffnung des ersten elektroventils (3) nach Wiedereinschaltung der Stromversorgung umfaßt.

9. Anlage nach irgendeinem der Ansprüche 2 bis 8, dadurch gekennzeichnet, daß sie eine By-passleitung (15) umfaßt, die die Wasserzufuhrleitung (2) mit einer Abfuhrleitung (11) verbindet, und zwar über ein Elektroventils (16) in normal geöffneter Stellung, das sich im Falle einer Disfunktion der Anlage (1) oder eines Ausfalls der elektrischen Stromversorgung dieser letzten automatisch öffnet.
